# DEMANDE DE BREVET EUROPEEN

(11) **EP 0 741 968 A2**
(43) Date de publication de la demande: **13.11.1996**
(21) Numéro de dépôt: 96480019.7
(22) Date de dépôt: 12.02.1996
(51) Int. Cl.: A01N 3/00

(54) **Sève artificielle pour la conservation des plantes**

(30) Priorité: 14.02.1995 FR 9501900
(71) Demandeur: Cassan, Alain M., 04150 Simiane La Rotonde (FR)
(72) Inventeur: Cassan, Alain M., 04150 Simiane La Rotonde (FR)
(74) Mandataire: Hammond, William

(57) **Abrégé**

L'invention concerne une sève artificielle pour la naturalisation de végétaux frais ou d'une partie de ceux-ci, comprenant de l'eau, du glycérol et au moins un autre alcool, ainsi qu'au moins un colorant et du chlorure de sodium, caractérisée par le fait que cet alcool contient au moins un cycle aromatique, et en outre de préférence au moins un groupement éthoxyle.

## Description

L'invention se rapporte à une sève artificielle pour la naturalisation de végétaux frais ou d'une partie de ceux-ci.

Les compositions utilisées habituellement sont constituées d'un mélange d'eau et de glycérine dans des proportions variant entre 60/40 et 80/20 environ, auquel on ajoute du chlorure de sodium et au moins un colorant, qui est généralement choisi parmi la tartrazine (E102), le bleu patent (E131), le vert patent (ES11), le rouge amaranthe (E123), etc.
Certaines compositions contiennent également un sel de potassium.

Pour procéder à la naturalisation d'une plante, on trempe la tige de celle-ci dans un bain de sève artificielle jusqu'à absorption de cette sève par toutes les parties de la plante, puis on soumet la plante à un séchage.

Le rôle de la glycérine dans la composition est de favoriser la circulation de la sève artificielle dans la plante de manière à rendre possible l'absorption.
Afin d'améliorer l'absorption par la plante, on a imaginé d'ajouter au mélange ci-dessus un autre alcool comme l'éthanol, dans une proportion de l'ordre de 0.01 à 0.1 ⁰/00 en volume. Une telle sève artificielle est présentée par exemple dans le document FR-A-2 621 453.

Selon un autre document FR-A-2 585 538, la présence d'environ 1% en masse d'éthanol dans une sève artificielle a pour fonction de bloquer le processus de décoloration de la plante.

Dans un autre document WO 91/03 159, il est proposé d'ajouter au glycérol un ou plusieurs polyalcools contenant au moins cinq groupements hydroxyles, tels que le sorbitol ou le polyéthylène glycol. L'effet recherché selon cette publication est de favoriser la cristallisation de la sève artificielle et d'éviter les phénomènes de blessures sur la plante. Les polyalcools préférés sont des saccharides de faible poids moléculaire.

Un des buts de l'invention est d'améliorer encore et d'accélérer l'absorption d'une sève artificielle par un végétal frais, de façon à diminuer le temps de trempage et de diminuer ainsi le temps de fabrication d'un végétal naturalisé à partir d'un végétal frais.

A cet effet, la sève artificielle, selon l'invention, pour la naturalisation de végétaux frais ou d'une partie de ceux-ci, est caractérisée par le fait qu'elle comprend, outre le glycérol, un alcool contenant un cycle aromatique.
De préférence, cet alcool contient également au moins un groupement éthoxyle.

Cet alcool est avantageusement un nonylphénol polyéthoxylé, par exemple le produit commercialisé par la la société SOPRA sous la marque AGRAL.

Cet alcool est avantageusement présent dans la sève artificielle dans une proportion d'environ 1 à 5 mg/litre, et de préférence environ 2 mg/litre.

La sève artificielle peut être préparée sous une forme prête à l'emploi, ou bien sous la forme d'une composition concentrée, destinée à être diluée dans de l'eau avant utilisation.

La migration de la sève artificielle selon l'invention dans les végétaux est considérablement favorisée. La sève artificielle selon l'invention permet de gagner 12 heures de traitement par rapport aux traitements au moyen de sèves artificielles de l'art antérieur.

L'explication proposée, sans limiter la portée de l'invention, est que l'alcool contenant au moins un cycle aromatique est un produit "mouillant" qui accélère l'absorption par le végétal de la sève artificielle selon l'invention. On dispose ainsi d'un produit non ionique et neutre qui améliore l'absorption et l'adhésivité des constituants de la sève artificielle dans le végétal.

On constate expérimentalement que, de manière surprenante, le gain de temps au niveau du séchage est également très important.

On peut ainsi accélérer la rotation des végétaux aussi bien dans les bacs d'absorption et dans les séchoirs. Cette rapidité du séchage peut provenir de la volatilité élevée apportée par l'alcool contenant au moins un cycle aromatique.

La sève artificielle selon l'invention permet de traiter tous les végétaux à feuillages persistants ou non, et notamment les variétés suivantes : feuillages de hêtre, chêne, bruyère, églantier, lierre, houx, cyprès et autres conifères. La sève artificielle selon l'invention s'applique bien entendu également à la naturalisation de fleurs.

Il est recommandé de procéder à la coupe des végétaux au moins 2 heures après le lever du soleil, de façon que la rosée se soit évaporée, et d'attendre 1 heure avant la mise au bain, dans le but d'assoiffer les végétaux;

On coupe en biseau l'extrémité des tiges des végétaux destinés au trempage.

On les dispose ensuite dans un bain de sève artificielle selon l'invention à la température ambiante de la pièce, soit environ 20 à 25°C. Il est bon de maintenir une bonne luminosité naturelle ou artificielle et de renouveler l'air afin d'évacuer l'humidité produite et donc favoriser l'absorption.

Le temps de trempage est de préférence d'environ 48 à 72 heures, mais le colorant atteint déjà l'extrémité des feuilles au bout de 12 heures.

On sèche ensuite les végétaux, de préférence dans un séchoir à air pulsé et chauffé environ à 30-40°C. Le temps de séchage est d'environ 12 à 48 heures selon les variétés traitées.

### Exemple de sève artificielle selon l'invention :

Une sève artificielle selon l'invention contiendra par exemple :
- eau : 70% en volume ;
- glycérine : 30 % en volume ;
- alcool contenant au moins un cycle aromatique : 2 ml/litre de mélange eau/glycérine ;
- chlorure de sodium : 2,5 g/litre de mélange eau/glycérine ;
- colorants : 23,10 g/litre de mélange eau/glycérine.

L'eau est de préférence chauffée au voisinage de 40°C. On mélange avec soin les constituants. On obtient la sève artificielle prête à l'emploi.

### Exemple de sève artificielle concentrée selon l'invention

Une sève artificielle selon l'invention préparée sous forme concentrée destinée à être diluée avant utilisation comprendra par exemple :
- eau : 30 %
- glycérine : 70 %
- chlorure de sodium : 7,5 g/litre de mélange eau/glycérine
- AGRAL : 6 ml/litre de mélange eau/glycérine
- colorants : 69,30 g/litre de mélange eau/glycérine (tartrazine E102 et/ou bleu patent E131).

On mélange avec soin ces constituants, en chauffant de préférence l'eau au voisinage de 40°C, et l'on obtient la sève artificielle sous forme de composition concentrée, qui doit donc être diluée avant utilisation.

Préalablement à une utilisation, on dilue 1 volume de la composition concentrée dans 2 volumes d'eau douce chauffée à 30 40°C avant utilisation, de façon à obtenir la sève artificielle.

## Revendications

1. Sève artificielle pour la naturalisation de végétaux frais ou d'une partie de ceux-ci, comprenant de l'eau, du glycérol et au moins un autre alcool, ainsi qu'au moins un colorant et du chlorure de sodium, caractérisé par le fait que cet alcool contient au moins un cycle aromatique.

2. Sève artificielle selon la revendication 1, caractérisée par le fait que l'alcool contient en outre au moins un groupement éthoxyle.

3. Sève artificielle selon l'une des revendications 1 ou 2, caractérisée par le fait que l'alcool est un nonylphénol polyéthoxylé.

4. Sève artificielle selon l'une des revendications précédentes, caractérisée par le fait que l'alcool contenant un cycle aromatique est présent dans le mélange eau/glycérol dans une proportion d'environ 1 à 5 mg/litre.

5. Sève artificielle selon la revendication 4, caractérisée par le fait que l'alcool contenant un cycle aromatique est présent dans le mélange eau/glycérol dans une proportion d'environ 2 mg/litre.

6. Sève artificielle selon l'une des revendications précédentes, caractérisé par le fait qu'elle est formée de :
- eau : 70% environ en volume ;
- glycérine : 30 % environ en volume ;
- alcool contenant au moins un cycle aromatique : environ 2ml/litre de mélange eau/glycérine ;
- chlorure de sodium : environ 2,5 g/litre de mélange eau/glycérine ;
- colorants : environ 23,10 g/litre de mélange eau/glycérine.

7. Sève artificielle concentrée, caractérisée par le fait qu'elle est formée des mêmes constituants et selon les mêmes proportions qu'une sève artificielle selon l'une des revendications précédentes, mais avec une proportion réduite d'eau.

8. Sève artificielle concentrée selon la revendication 7, caractérisée par le fait qu'elle est formée de :
- eau : 30% environ en volume ;
- glycérine : 70 % environ en volume ;
- alcool contenant au moins un cycle aromatique : environ 6ml/litre de mélange eau/glycérine ;
- chlorure de sodium : environ 7,5 g/litre de mélange eau/glycérine;
- colorants : environ 69,30 g/litre de mélange eau/glycérine.
